# EUROPEAN PATENT SPECIFICATION

(11) **EP 2 075 428 B1**
(45) Date of publication and mention of the grant of the patent: **16.11.2011**
(21) Application number: 08022344.9
(22) Date of filing: 23.12.2008
(51) Int. Cl.: F01N 3/36, F01N 3/28, F01N 13/08, F01N 3/035, F01N 3/08, F01N 3/20, B01F 5/00

(54) **Emission control system**
Emissionssteuerungssystem
Système de contrôle d'émission

(30) Priority: 25.12.2007 JP 2007332379; 25.12.2007 JP 2007332380
(43) Date of publication of application: 01.07.2009
(73) Proprietor: Mitsubishi Jidosha Kogyo Kabushiki Kaisha, Tokyo (JP); MITSUBISHI JIDOSHA ENGINEERING KABUSHIKI KAISHA, Okazaki-shi Aichi (JP)
(72) Inventor: Kojima, Miutsutaka, Tokyo (JP); Kimura, Hiroyuki, Tokyo (JP); Okada, Kojiro, Tokyo (JP); Shigahara, Kei, Tokyo (JP); Hata, Michihiro, Tokyo (JP); Kawashima, Kazuhito, Tokyo (JP); Koga, Kazuo, Okazaki-shi Aichi (JP); Maehara, Kazuto, Okazaki-shi Aichi (JP); Ishii, Hajime, Okazaki-shi Aichi (JP)
(74) Representative: Vossius & Partner

(56) References cited:
- FR-A1- 2 891 305
- FR-A1- 2 897 642
- JP-A- 2005 127 260

## Description

For purification of exhaust emissions from a car (a vehicle) having a diesel engine, an emission control system is used in which a adsorption type NOx catalyst, a selective reduction type NOx catalyst and a diesel particulate filter are combined together to prevent the emission of NOx (oxides of nitrogen) and PM (particulate matter) which are contained in exhaust emissions from a diesel engine to the atmosphere.

An emission control system like this adopts a construction in which a catalyst referred to as a pre-stage catalyst such as an oxidation catalyst, a NOx trap catalyst or a selective reduction type NOx catalyst is provided in an interior of an exhaust pipe portion which expels exhaust gases discharged from the engine to the outside thereof, and a fuel injection valve (such as one for adding a reducing agent) which injects a fuel required for reaction of the catalyst to an upstream side of the catalyst, for example, the oxidation catalyst.

In the emission control system, for efficient reaction of the pre-stage catalyst, it becomes important that the injected fuel is sufficiently mixed with the exhaust gases before the fuel flows into the pre-stage catalyst.

For this to happen, a sufficient fuel spray travel needs to be secured in a segment from the fuel adding valve to the catalyst.

However, as it is required that a location where a catalyst is installed is secured in the vicinity of an exhaust side of an engine in order to meet the recent tendency of enhancing the exhaust emission purifying efficiency at the time of cold start, it becomes difficult to ensure such a sufficient fuel spray travel. An example of an engine adopting the aforesaid construction is disclosed in JP-A-2005-127260.

Document JP 2005-127260 A refers to an exhaust emission control device for purifying exhaust gas of an internal combustion engine with an injector for injecting fuel, a fuel reforming catalyst, and a turbocharger arranged on the downstream side of the reforming catalyst in an exhaust pipe.

Namely, in order to make full use of the catalyst installation design described above, as is disclosed in Jp-A-2005-127260, a fuel injection valve has to be provided at a part of an exhaust pipe which lies directly upstream of the catalyst, that is, for example, at a bent portion of the exhaust pipe. To make this happen, it becomes difficult to ensure a long enough fuel spray travel for mixture of fuel with exhaust gases between the fuel injection valve and the catalyst.

From the treasons regarding the installation of the fuel injection valve and the catalyst, the situation in which the fuel spray travel for mixture of fuel with exhaust gases becomes difficult to be ensured is seen not only the emission control system in which the bent portion is provided in the exhaust pipe but also in an emission control system in which no such bent portion is provided.

To cope with this, as is disclosed in JP-A-2004-44483, an emission control system is proposed which has a construction in which a fuel injection valve is disposed in a position lying far apart from an exhaust pipe portion so that fuel is injected from the position which lies far away from the flow of exhaust gases.

However, even with this proposed emission control system, from the limitations on the installation of the fuel injection valve and the catalyst, which are similar to the aforesaid one, there still remains the situation in which the fuel spray travel for mixture of fuel with exhaust gases is difficult to be ensured.

Due to this, in an emission control system, it remains difficult to mix injected fuel with exhaust gases sufficiently. This has caused a problem that uniformly atomized fuel is difficult to be supplied to a catalyst and hence the catalyst cannot fulfill its function.

It is therefore an object of the invention to provide an emission control system which enables a sufficient mixture of a reducing agent with exhaust gases even though a fuel spray travel necessary for the aforesaid mixture is not ensured between an additive injection valve and a catalyst.

This object is attained with the subject-matter of the claims.

The exhaust pipe portion located at upstream side of the catalyst may be formed in such a manner as to intersect the injection flow of the additives at an acute angle and to confront the catalyst. The exhaust gas induction portion may be formed from an upstream part of the exhaust pipe portion which intersects the injection flow of the additives.

The exhaust pipe portion located at upstream side of the catalyst may be formed in such a manner as to intersect the injection flow of the additives in a substantially normal direction and to confront the catalyst. The exhaust gas induction portion may be formed from an upstream part of the exhaust pipe portion which intersects the injection flow of the additives.

A release portion where a contact with the injection flow of the additives which is deflected as a result of collision with the exhaust gas is avoided, may be formed at a downstream part of the exhaust pipe portion which intersects the injection flow of the additives.

The exhaust gas induction portion may be formed in such a manner as to keep an area of a flow path from an upstream side of the exhaust pipe portion constant.

The exhaust pipe portion may be provided with: a bent portion, connected to an upstream side of the catalyst, and formed by bending the exhaust pipe portion; and a projecting portion, one end of which is opened to a wall surface of the bent portion, and which projects to an opposite side of the catalyst in a direction of a central axis of the catalyst. The additive injection valve may be provided at the other end of the projecting portion.

Preferred embodiments in accordance with the present invention are exemplified in the following.
Fig. 1 is a partially sectional side view showing the construction of an emission control system according to a first embodiment of the invention.
Fig. 2 is a sectional view of an exhaust gas induction portion taken along the line A-A in Fig. 1.
Fig. 3 is a schematic perspective view showing the exhaust gas induction portion.
Fig. 4 is a sectional side view showing the construction of an emission control system according to a second embodiment of the invention.
Fig. 5 is a sectional view taken along the line B-B in Fig. 4.
Fig. 6 is a sectional side view showing in an enlarged fashion of the vicinity of an inlet of a catalyst of an emission control system according to a third embodiment of the invention.
Fig. 7 is a sectional view taken along the line C-C in Fig. 6.
Fig. 8 is a side view showing an emission control system according to a fourth embodiment of the invention.
Fig. 9 is a sectional view taken along the line D-D in Fig. 8.

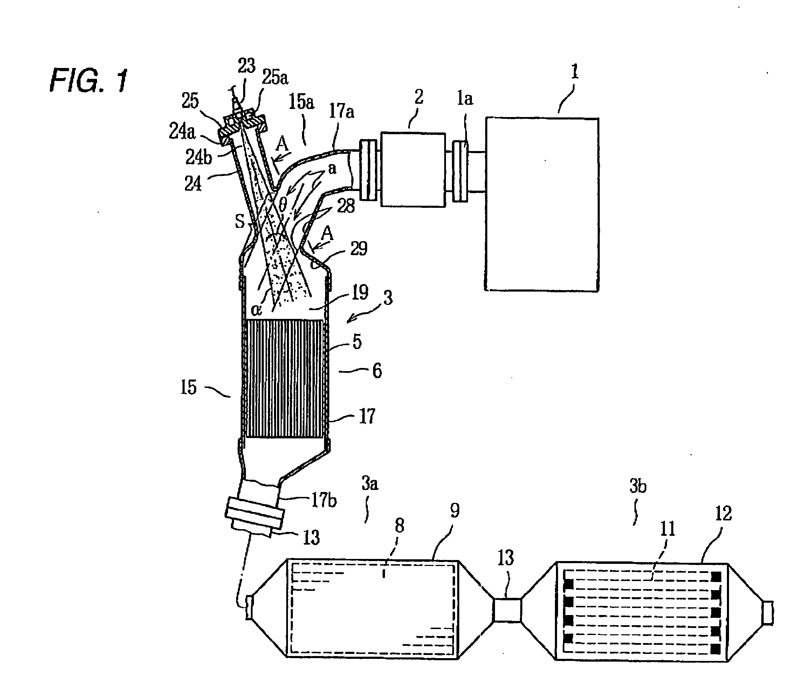

Hereinafter, the invention will be described based on a first embodiment shown in Figs. 1 to 3.

Fig. 1 shows an exhaust system of an internal combustion engine, for example, a diesel engine. In Fig. 1, reference numeral 1 denotes an engine main body of the diesel engine, la an exhaust manifold (only part of which is shown) of the engine main body 1 of the diesel engine, and 2 a supercharger or, in this embodiment, a turbocharger connected to an outlet of the exhaust manifold 1a.

An emission control system 3 is provided at an exhaust outlet of the turbocharger 2. A system in which a NOx removing system 3a for adsorbing NOx (oxides of nitrogen) contained in exhaust gases and periodically reduction removing the adsorbed NOx and a PM (particulate matter) capturing system 3b for capturing PM are combined together is used for the emission control system 3.

For example, used for the NOx removing system 3a is a configuration in which a catalytic converter 6, a catalytic converter 9 and a fuel addition valve (an additive injection valve) 23 are combined together. The catalytic converter 6 is coupled to the turbocharger 2 in such a manner as to extend downwards from the exhaust outlet of the turbocharger 2 and incorporates therein a pre-stage oxidation catalyst 5 (corresponding to the catalyst of the subject patent application). The catalytic converter 9 is coupled horizontally to the rear of the catalytic converter 6 and incorporates therein a NOx trap catalyst 8. The fuel addition valve 23 supplies a catalyst reaction promoting fuel which constitutes additives to the oxidation catalyst 5, which will be described later. In addition, a configuration is adopted for the capturing system 3b in which a catalytic converter 12 which incorporates therein a particulate filter 11 is coupled to the catalytic converter 9. An exhaust pipe portion 15 for inducing exhaust gases discharged from the diesel engine (the engine main body 1) to the outside thereof is made up of the catalytic converters 6, 9, 12 and connecting portions 13 which connect the catalytic converters.

In these catalytic converters, a cylindrical housing 17 of the catalytic converter 6 which accommodates therein the oxidation catalyst 5 is bent at an upper portion in such a way as is shown in Fig. 1, so that an inlet portion 17a is disposed horizontally for connection to the turbocharger 2 which is situated thereabove. In addition, an outlet portion 17b which communicates with the catalytic converter 9 lying therebelow is disposed in such a manner as to be oriented downwards. A bent portion 15a of the exhaust pipe portion 15 is formed in such a manner as to be bent in a position lying directly after an exhaust side of the diesel engine by the housing 17. A catalyst installation space is secured in a portion lying directly below the bent portion 15a. The oxidation catalyst 5 is installed in a position lying in the vicinity of the exhaust side of the diesel engine.

The fuel addition valve 23 is made to inject a fuel required for catalyst reaction to the oxidation catalyst 5 and is provided in a position lying directly above the oxidation catalyst 5, for example, on the bent portion 15a or on an outer circumferential wall portion lying downstream of the bent portion 15a to fulfill the aforesaid function. The fuel addition valve 23 has a fuel injecting portion for injecting the fuel at a distal end portion thereof. The fuel addition valve 23 is installed at an end of a cylindrical portion 24 which branches off at an outer circumferential portion of the exhaust pipe portion 15 which lies downstream of the bent portion 15a in such a manner as to extend outwards by the use of a mounting flange 24a and a base seat 25. The cylindrical portion 24 is a projecting portion projecting to an opposite side of the oxidation catalyst 5 in a direction of a central axis of the oxidation catalyst 5. One end of the projecting portion is opened to the wall portion of the bent portion 15a and the fuel addition valve 23 is provided at the other end of the projecting portion. By this configuration, the fuel injecting portion at the distal end portion of the fuel addition valve 23 is made to face a fuel injection path 24b which is formed by an interior space of the cylindrical portion 24. The fuel injection path 24b extends in such a manner as to be inclined to an opposite side to a direction in which the bent portion 15a is bent, and an outlet end thereof is oriented towards a circumferential edge of an inlet end face of the oxidation catalyst 5 rather than towards a center thereof (that is, towards the inlet portion 17a). By this configuration, the fuel promoting the reaction of the oxidation catalyst 5 is made to be injected from the position lying far apart from a flow of exhaust gases to the oxidation catalyst 5 from a direction which intersects the flow of exhaust gases which passes through the bent portion 15a. Specifically, the fuel is made to be injected downwards, that is, towards a mixing chamber 19 defined in front of the inlet end face of the oxidation catalyst 5 from a direction which intersects a flowing direction a of the flow of exhaust gases at an acute angle θ1 as is shown in Fig. 1. By this configuration, a downstream portion of a flow of injected fuel a where a spray penetration becomes weak is made to collide with exhaust gases in a position directly upstream of the oxidation catalyst 5. In addition, reference numeral 25a denotes a coolant channel formed in an interior of the base seat 25.

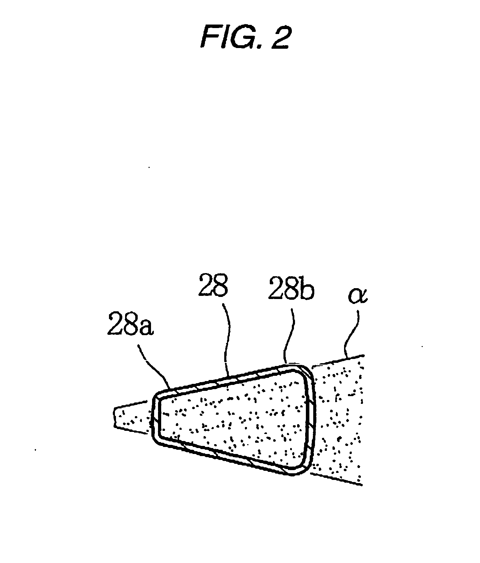

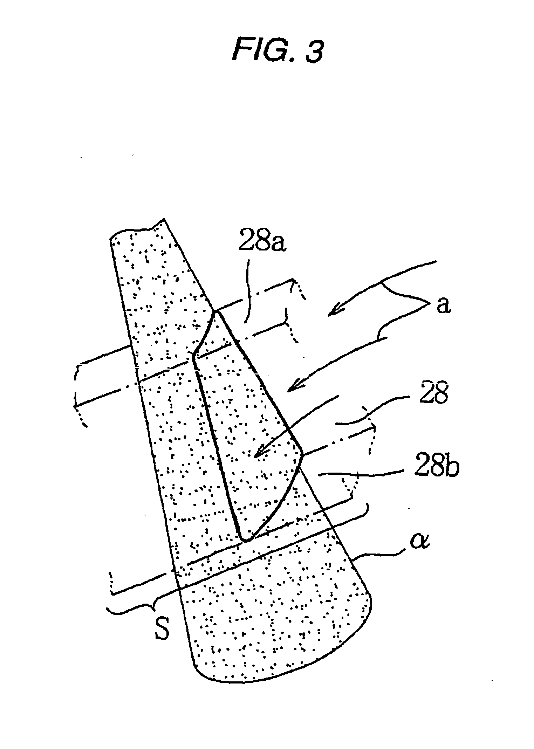

On the other hand, on an exhaust pipe part which lies upstream of the oxidation catalyst 5, an exhaust gas induction portion 28 is provided in a position where the exhaust pipe part intersects the flow of injected fuel α injected from the fuel addition valve 23, that is, at an exhaust pipe part S which constitutes an area extending, for example, from the bent portion 15a to the mixing chamber 19. As is shown in a sectional view shown in Fig. 2 and a perspective view shown in Fig. 3, the exhaust gas induction portion 28 is formed in such a manner that a sectional shape of a flow path of the exhaust pipe part S which intersects the flow of injected fuel α equates to a side view of an injection region of the flow of injected fuel a as viewed from a transverse direction in which the flow of injected fuel α intersects exhaust gases. Specifically, the exhaust gas induction portion 28 is formed in such a manner that the sectional shape of the flow path of the exhaust pipe part S is formed into a fan-like shape which is substantially the same shape as a shape of a downstream side of the flow of injected fuel α as projected from the transverse direction. By being formed in the way described above to thereby have the same shape as that of the flow of injected fuel α which expands towards the leading end thereof, the exhaust gas induction portion 28 is made to have a flow path whose sectional shape is such that a portion corresponding to an upstream side of the flow of injected fuel a becomes thin, whereas an opposite portion corresponding to the downstream portion of the flow of injected fuel α becomes thick. In Fig. 2, reference numeral 28a denotes one of the portions where the flow path section becomes thin, and 28b denotes the other portion where the flow path section becomes thick. A flow of exhaust gases is made to be distributed uniformly over the flow of injected additives in the exhaust gas induction portion by the exhaust gas induction portion 28 being configured as has been described above, whereby an opportunity is given where the flow of injected additives is allowed to contact exhaust gases sufficiently.

A flow path area of the portion of the exhaust pipe portion 15 which extends from the inlet portion 17a which constitutes an upstream end of the exhaust pipe portion 15 to the exhaust gas induction portion 28 is held constant to a predetermined flow path area. Of course, the sectional shape of the flow path is constructed in such a manner as to change gradually so as to follow the shape of the flow of injected additives α in the exhaust gas induction portion 28, whereby the generation of an unnecessary passage resistance is prevented.

In addition, a portion of the exhaust pipe portion 15 which lies downstream of the exhaust gas induction portion 28 is formed in such a manner as to be expanded in a radial direction. The fuel and exhaust gases which have collided with each other completely are supplied to the inlet end face of the oxidation catalyst 5 while being expanded in the radial direction by an expanded portion 29 which results from the radial expansion of the portion of the exhaust pipe portion 15. It is effective to form the expanded portion 29 into a flared shape (a bell mouth shape) as well as a conical shape in supplying the mixture of fuel and exhaust gases to the oxidation catalyst 5 under uniform distribution.

In addition, the fuel injected from the fuel addition valve 23 is used to generate a reducing agent as a result of reaction with the oxidation catalyst 5, so as to reduce to remove NOx and SOx which are adsorbed on to the NOx trap catalyst 8 by the use of the reducing agent so generated or to obtain heat as a result of reaction with the oxidation catalyst 5, so as to burn to remove PM captured by the particulate filter 11. Because of this, the fuel addition valve 23 is controlled by a control unit for controlling the diesel engine, for example, an ECU (not shown) to inject the fuel when a catalytic reaction is required during operation of the diesel engine for reduction removal of NOx and SOx and burning removal of PM.

Next, the function of the emission control system 3 configured as has been described above will be described.

Exhaust gases discharged from the diesel engine during operation thereof are, as is shown in Fig. 1, expelled to the outside air through the exhaust manifold 1a, the turbocharger 2, the bent portion 15a, the exhaust gas induction portion 28, the oxidation catalyst 5, the NOx trap catalyst 8 and the particulate filter 11.

NOx and SOx which are contained in exhaust gases are adsorbed on to the NOx trap catalyst 8, and PM is similarly captured by the particulate filter 11.

Assuming that the fuel addition valve 23 is activated as time has arrived to remove the adsorbed NOx and SOx and captured PM.

Then, the fuel for removing NOx, SOx and PM is injected from the fuel injecting portion of the fuel addition valve 23 from the acute angle direction through the fuel injection path 24b to the flow of exhaust gases which is flowing in the exhaust pipe part S. By this action, the flow of injected fuel α and the flow of exhaust gases are made to collide with each other.

As this occurs, since the exhaust gas induction portion 28, which has the flow path whose sectional shape is substantially the same as that of the injection region of the flow of injected fuel α as viewed from the transverse direction, is formed in the exhaust pipe part S which intersects the flow of injected fuel a at the portion directly upstream of the downstream portion of the flow of injected fuel α where the spray penetration becomes weak, the exhaust gases which have passed through the exhaust gas induction portion 28 pass over the flow of injected fuel α while being distributed uniformly thereover.

By this action, there is provided an opportunity where the exhaust gases in the flow of exhaust gases and the fuel in the flow of injected fuel α are allowed to contact each other sufficiently, whereby the exhaust gases and the fuel contact each other uniformly for sufficient mixture of the exhaust gases with the furl.

As this occurs, since the flow velocities of the fuel and the exhaust gases are such that fuel in the upstream part of the flow of injected fuel a which is near from the fuel addition, valve 23 and in which the spray penetration is strong collides with exhaust gases of a high flow velocity whose flow velocity has been increased at the portion 28a where the section of the flow path is narrow, while fuel in the downstream part of the flow of injected fuel α which is far away from the fuel addition valve 23 and in which the spray penetration is weak collides with exhaust gases of a low flow velocity whose flow velocity is reduced at the portion 28b where the section of the flow path is wide, a further uniform mixture of additives and exhaust gases can be obtained. The fuel and exhaust gases which are mixed uniformly then flow downwards towards the oxidation catalyst 5 while expanding in the radial direction due to the expanded portion 29.

Here, since the flow of exhaust gases and the flow of injected fuel α intersect each other at the acute angle to thereby suppress the deflection of the flow of injected fuel α that would otherwise be produced by the flow of exhaust gases, the fuel and exhaust gases which have been mixed with each other in the way described above are supplied to a predetermined position of the oxidation catalyst 5, for example, to a substantially central portion of the inlet end face thereof.

Consequently, even though the necessary distance or fuel spray travel is ensured between the fuel addition valve 23 and the oxidation catalyst 5, the fuel which is uniformly mixed with the exhaust gases can be supplied to the catalyst due to the formation of the exhaust gas induction portion 28.

Therefore, the function of the oxidation catalyst 5 can be made to be exhibited sufficiently by the use of the exhaust gas induction portion 28. Of course, when the expanded portion 29 is used in parallel, the fuel can be supplied to the oxidation catalyst 5 while being distributed more uniformly. On top of this, since the exhaust gas induction portion 28 is formed in such a manner that the flow path area is held constant to the predetermined flow path area from the upstream of the exhaust pipe portion 15, there is caused no increase in flow path resistance in the exhaust pipe portion 15, whereby a reduction in engine output can be suppressed.

In particular, in the event that the exhaust gas induction portion 28 is adopted in the fuel injection construction in which the flow of exhaust gases is made to intersect the flow of injected fuel α at the acute angle, the exhaust gases and the fuel can be mixed together sufficiently while enjoying the benefit of the method in which the fuel is injected to the predetermined position while suppressing the deflection of the flow of injected fuel α.

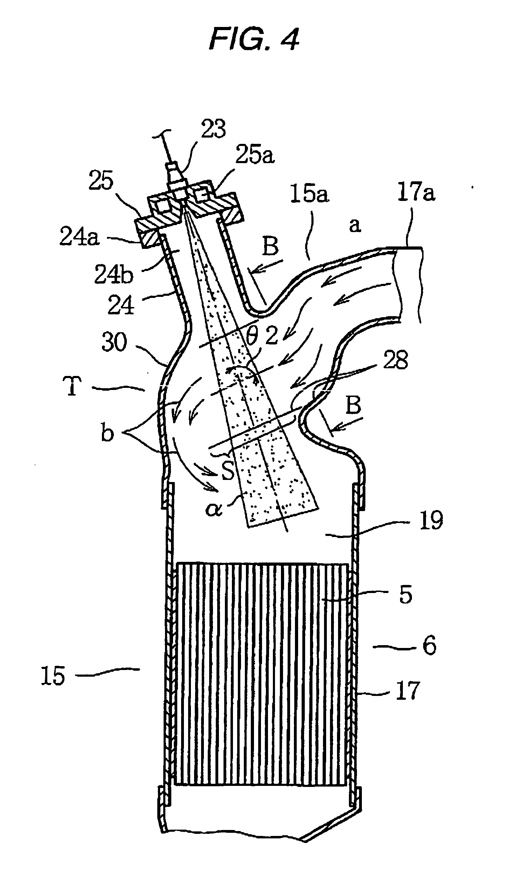

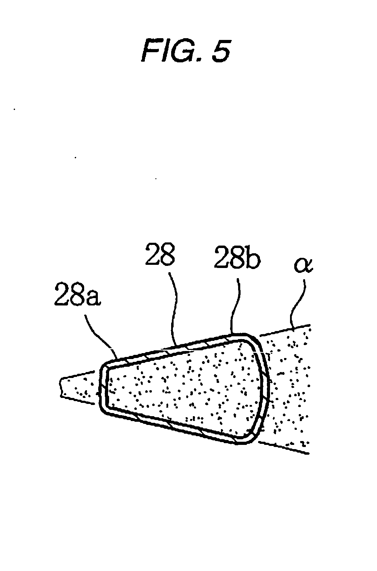

Figs. 4 and 5 show a second embodiment of the invention. In Figs. 4 and 5, like reference numerals are imparted to like portions to those of the first embodiment, and the description thereof will be omitted.

In the second embodiment, the invention is applied to an emission control system in which a flow of exhaust gases does not intersect a flow of injected fuel α at an acute angle as done in the first embodiment but intersects the flow of injected fuel α at substantially right angles.

Specifically, in the emission control system of this embodiment, as with the first embodiment, an injecting direction of a fuel addition valve 23 is determined to lie in a position which is offset from an oxidation catalyst 5. A path is formed in an exhaust pipe part lying upstream of the oxidation catalyst 5 in such a manner as to intersect a flow of injected fuel α injected from the fuel addition valve 23 in a substantially right angle direction so as to be directed towards the oxidation catalyst 5. By this configuration, on the contrary to the first embodiment, a construction is realized in which the flow of injected fuel α is pushed by the flow of exhaust gases, so as to deflect the flow of injected fuel α from the initial offset position to a desired position, whereby the fuel is injected to a predetermined position. In addition, as with the first embodiment, an exhaust gas induction portion 28 whose flow path section at the exhaust pipe part, which is something like one shown in a sectional view of Fig. 5, is made to have substantially the same shape as a side view of an injection region of the flow of injected fuel α is provided directly upstream of an exhaust pipe part S of the exhaust pipe part lying upstream of the oxidation catalyst 5 which intersects the flow of injected fuel α injected from the fuel addition valve 23.

By this configuration, even with the emission control system in which the flow of injected fuel α is deflected by the flow of exhaust gases, which is opposite to or differs from the configuration of the first embodiment, so that the fuel is injected to the predetermined position, by enjoying the benefit of the method adopted therein, the exhaust gases can be mixed with the fuel sufficiently by the use of the exhaust gas induction portion 28.

In particular, in the second embodiment, for example, a curved recessed portion 30 is formed as a release portion on a wall surface of a downstream side exhaust pipe part T which intersects the flow of injected fuel a in such a manner that nothing in the exhaust pipe portion 15 is affected by the flow of injected fuel α when it is deflected. By this recessed portion 30, the contact of the flow of injected fuel a which is deflected with the wall portion of the exhaust pipe part T can be avoided, whereby a good mixture of the exhaust gases with the fuel can be promised. Moreover, since a wall portion of the recessed portion 30 causes exhaust gases which have come into contact with the recessed portion 30 to bounce back towards the flow of injected fuel α as is indicated by arrows b so as to cause the exhaust gases to collide with the fuel in the flow of injected fuel α, it can be expected that the mixture of the fuel with the exhaust gases is promoted further.

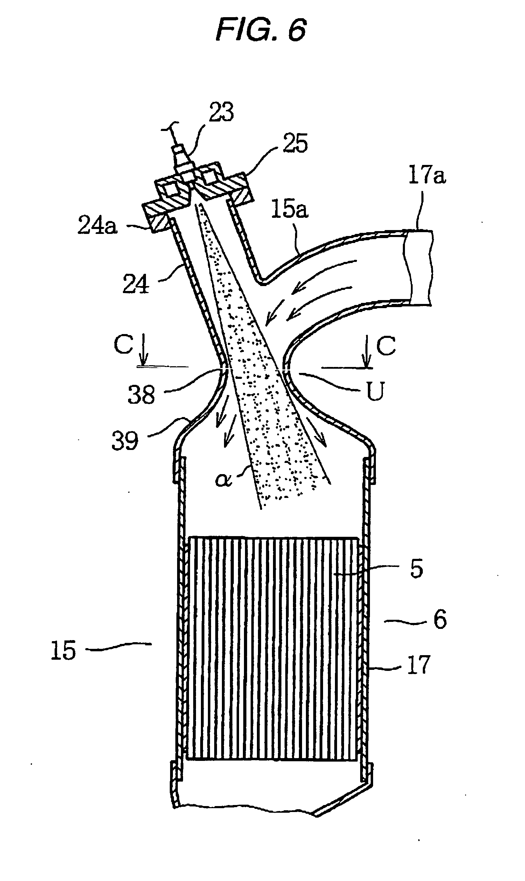

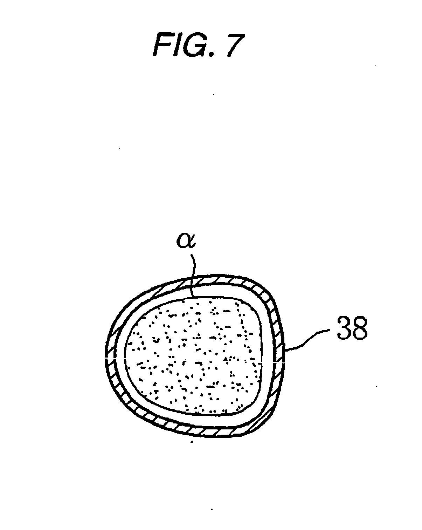

In addition, Figs. 6 and 7 show a third embodiment of the invention. In Figs. 6 and 7, like reference numerals are imparted to like portions to those of the first embodiment, and the description thereof will be omitted.

As is shown in an enlarged fashion in Fig. 6, a fuel mixing portion (an additive mixing portion) 38 is provided in a position of an exhaust pipe part lying upstream of an oxidation catalyst 5 where a flow of injected fuel α injected from a fuel addition valve 23 passes, specifically, an exhaust pipe part U on an outlet side of a bent portion 15a which constitutes a portion where injected fuel and exhaust gases are made to collide with each other. This fuel mixing portion 38 is configured in such a manner that only a sectional shape of a flow path at the exhaust pipe part U is, as is shown in Fig. 7, has substantially the same shape as a sectional shape of an injection region of the flow of injected fuel α which passes through the exhaust pipe part U, that is, that the sectional shape of the flow path has the same shape of the sectional shape of the injection region. Fuel injected is made to be given by the fuel mixing portion 38 an opportunity where the fuel is uniformly distributed in an interior of the exhaust pipe part so as to be brought into sufficient contact with exhaust gases directed to the oxidation catalyst 5. In addition, a flow path area of a portion, including the fuel mixing portion 38, of an exhaust pipe portion 15 extending up to an inlet portion 17a which constitutes an upper end of the exhaust pipe portion 15 is held constant to a predetermined flow path area from upstream, so that an unnecessary passage resistance is not generated.

As is shown in Fig. 7, a wall surface of an end of a housing 17 which continuously follows an outlet of the fuel mixing portion 38 is formed into a bell mouth shape which expands in a radial direction. Fuel injected from the fuel mixing portion 38 is made to be supplied to an inlet end face of the oxidation catalyst 5 while being allowed to expand in the radial direction by a bell mouth portion 39 formed at the outlet of the fuel mixing portion 3B.

An exhaust pipe part lying in a position where it collides with a flow of injected fuel α and exhaust gases is formed into the fuel mixing portion 38 which has the flow path section which is substantially identical in shape to the section of the injection region of the flow of injected fuel α joins the exhaust gases thereat. Because of this, when the flow of injected fuel α passes through the fuel mixing portion 38, the flow of injected fuel α passes therethrough while being distributed uniformly thereover.

By this configuration, since an opportunity is given where exhaust gases in the flow of exhaust gases and fuel in the flow of injected fuel α are allowed to contact with each other sufficiently, the exhaust gases and the fuel are allowed to contact uniformly, and a sufficient mixture of the exhaust gases with the fuel occurs.

The fuel and exhaust gases which have emerged from the fuel mixing portion 38 are atomized while being allowed to expand in the radial direction by the bell mouth portion 39, so as to be supplied to the inlet end face of the oxidation catalyst 5 while the fuel is being distributed uniformly.

Consequently, by the formation of the fuel mixing portion 38, even though a required distance or fuel spray travel for mixture with exhaust gases is not ensured between the fuel addition valve 23 and the oxidation catalyst 5, uniformly atomized fuel can be supplied to the catalyst. Needless to say, of course, in the event that this configuration is adopted in parallel with the construction in which fuel is injected from a position which lies far away from the flow of exhaust gases, a good mixture of exhaust gases with fuel can be achieved.

Consequently, the function of the oxidation catalyst 5 can be exhibited sufficiently. In particular, since exhaust gases from a turbocharger 2 are introduced into the exhaust pipe portion 15 while being swirled, a better mixture of exhaust gases with fuel can be expected due to the swirling flow of exhaust gases produced then.

Moreover, since the flow path area of the exhaust pipe part including the fuel mixing portion 38 is configured in such as to be held constant to the predetermined flow path area from the upstream portion of the exhaust pipe portion 15, the flow path resistance in the exhaust pipe portion 15 is increased in no case, whereby a reduction in engine output can be suppressed.

On top of this, since the exhaust gases and fuel which have flowed out from the fuel mixing portion 38 are directed uniformly to the oxidation catalyst 5 (the catalyst) while being allowed to expand in the radial direction of the housing 17 due to the formation of the bell mouth portion 39 at the outlet of the fuel mixing portion 38, the fuel can be supplied to the oxidation catalyst 5 while being distributed uniformly.

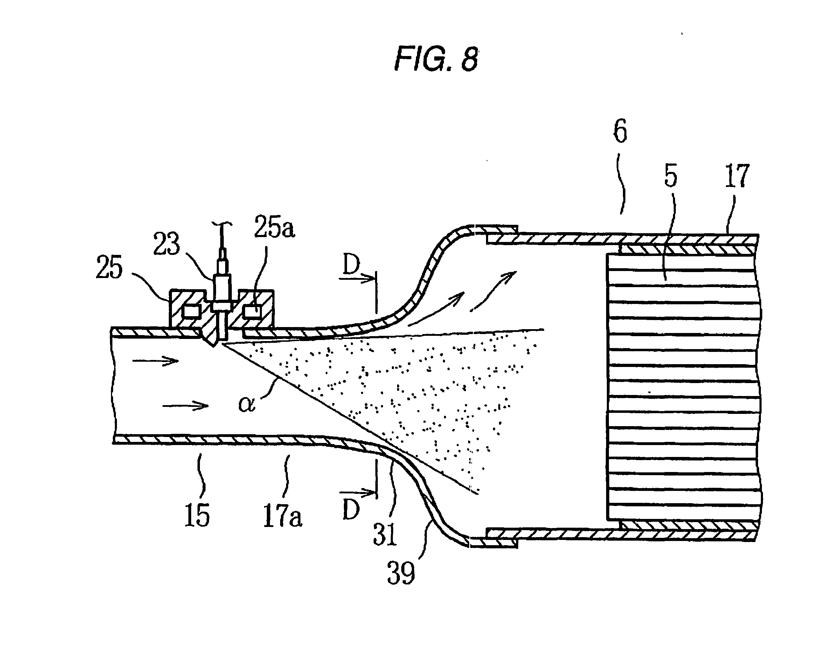

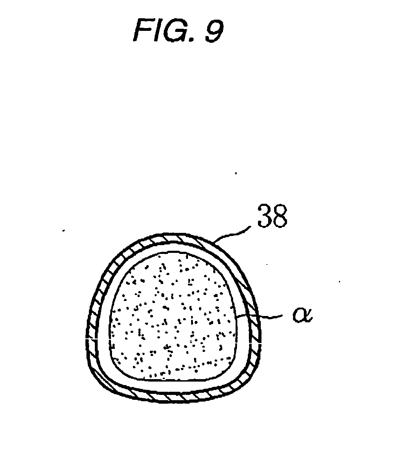

Figs. 8 and 9 show a fourth embodiment of the invention. In Figs. 8 and 9, like reference numerals are imparted to like portions to those of the first embodiment, and the description thereof will be omitted here.

In this embodiment, the invention is applied to an emission control system 3 in which a fuel addition valve 23 and an oxidation 5 are installed in an exhaust pipe portion 15 without forming a bent portion 15a.

Specifically, in the emission control system 3 of this embodiment, a straight-line exhaust pipe portion 15 is used, and an oxidation catalyst 5 is provided in the exhaust pipe portion 15. In addition, a fuel addition valve 23 is provided directly upstream of the oxidation catalyst 5. Additionally, a sectional shape of a flow path of a straight-line exhaust pipe part U of the exhaust pipe portion 15 where a flow of injected fuel α passes is made to equate to a sectional shape of an injection region of the flow of injected fuel a which passes through the exhaust pipe portion 15, whereby a fuel mixing portion 31 is provided. Fig. 9 shows the sections of the fuel mixing portion 38 and the flow of injected fuel α.

Even with the emission control system 3 configured as has been described above, in the event that the fuel mixing portion 38 is formed, as with the first embodiment, even though a required distance of fuel spray travel for mixture is not ensured between the fuel addition valve 23 and the oxidation catalyst 5, uniformly distributed atomized fuel can be supplied to the oxidation catalyst 5 (the catalyst).

For example, in the embodiments, while the exhaust gases are described as being made to intersect the flow of injected fuel or additives at the acute angle or at right angles, the invention is not limited thereto. In addition, in the embodiments that have been described heretofore, while the invention is described as being applied to the emission control system in which the oxidation catalyst is used as a catalyst lying directly downstream of the bent portion and the NOx trap catalyst and the particulate filter are provided downstream of the oxidation catalyst, the invention is not limited thereto. Thus, the invention may be applied to emission control systems which adopt other exhaust gas purifying approaches. For example, the invention may be applied to an emission control system in which a NOx trap catalyst is used as a catalyst to be installed directly downstream of a bent portion, a particulate filter is provided downstream of the NOx trap catalyst, and an addition valve is provided upstream of the NOx trap catalyst, an emission control system in which a NOx trap catalyst is used as a catalyst to be installed directly downstream of a bent portion, a NOx trap catalyst, an oxidation catalyst and a particulate filter are provided downstream of the NOx trap catalyst, and an addition valve is provided upstream of the NOx trap catalyst, or an emission control system in which an addition valve is provided upstream of a selective reduction type catalyst and a particulate filter.

Furthermore, in the embodiments, while the fuel is described as being used as the additives, any substances may be adopted, provided that they can be supplied to catalysts. For example, as a reducing agent, substances may be used which include gas oil, gasoline, ethanol, dimethyl ether, natural gas, propane gas, urea, ammonia, hydrogen, carbon monoxide and the like. In addition, any substances other than reducing agents may be used, and these substances include, for example, air, nitrogen or carbon dioxide used to cool the catalyst, or air or ceria which promotes the burning removal of soot captured on to the particulate filter.

In addition, in the embodiments that have been described above, while the injecting configuration of the fuel addition valve 23 is described as being formed into a conical shape, a fuel addition valve having an injecting configuration which expands in a flat fan-shaped fashion or a fuel addition valve in which additives is injected from a plurality of injection holes may be adopted. In the case of a plurality of injection holes being provided, an outline of a plurality of flows of injected fuel constitutes an injection region.

According to an aspect of the invention, since the flow of exhaust gases is distributed uniformly over the flow of injected additives by the exhaust gas induction portion, the opportunity can be given where exhaust gases in the flow of exhaust gases and additives in the flow of injected additives are allowed to contact with each other sufficiently.

Consequently, the exhaust gases can be mixed with the additives sufficiently, and even though a required distance or fuel or additive spray travel for mixture is not ensured between the additive injection valve and the catalyst, the additives which is mixed with the exhaust gases uniformly can be supplied to the catalyst. As a result, the function of the catalyst can be exhibited sufficiently.

According to an aspect of the invention, the flow velocities of the additives and the exhaust gases after they have collided with each other are such that additives in the upstream part of the flow of injected additives in which the spray penetration is strong collides with exhaust gases of a high flow velocity whose flow velocity has been increased at the portion where the section of the flow path is narrow, while additives in the downstream part of the flow of injected additives in which the spray penetration is weak collides with exhaust gases of a low flow velocity whose flow velocity is reduced at the portion where the section of the flow path is wide, whereby a uniform mixture of additives and exhaust gases can be promoted, and the additives and exhaust gases which are mixed uniformly can be supplied to the oxidation catalyst 5.

According to an aspect of the invention, furthermore, by enjoying the benefit of the method in which the additives are injected to the predetermined position by suppressing the deflection of the flow of injected additives, the exhaust gases and the additives can be mixed with each other sufficiently.

According to an aspect of the invention, furthermore, by enjoying the benefit of the method in which the additives are injected to the predetermined position by deflecting the flow of injected additives by the flow of exhaust gases, which is opposite to or different from the method described above, the exhaust gases and the additives can be mixed with each other sufficiently.

According to an aspect of the invention, even though the flow of injected additives is deflected by the flow of exhaust gases, the additives in the flow of injected additives which is so deflected are prevented from being brought into contact with the wall surface of the exhaust pipe part by the release portion, a good mixture of the additives with the exhaust gases can be promised.

According to an aspect of the invention, since the flow path area of the exhaust pipe portion is held constant from the upstream portion to the exhaust gas induction portion, the flow path resistance is increased in no case, whereby a reduction in engine output occurs in no case.

According to an aspect of the invention, the opportunity can be given by the additive mixing portion where the exhaust gases in the flow of exhaust gases and the additives in the flow of injected additives are allowed to contact with each other sufficiently upstream of the catalyst, whereby the exhaust gases and the additives can be mixed together to a sufficient level.

Consequently, even though a required distance or additive spray travel for mixture is not ensured between the additive injection valve and the catalyst, the uniformly distributed atomized additives can be supplied to the catalyst, whereby the function of the catalyst can be exhibited sufficiently.

According to an aspect of the invention, since the flow path area of the exhaust pipe portion is held constant from the upstream portion to the additive mixing portion, the flow path resistance is increased in no case, whereby a reduction in engine output occurs in no case.

According to an aspect of the invention, furthermore, in addition to the advantages that have been raised above, since the exhaust gases and the additives which have flowed out from the additive mixing portion are directed uniformly towards the catalyst while being allowed to expand in the radial direction by the bell mouth-shaped outlet of the additive mixing portion, the additives can be supplied to the catalyst while being distributed uniformly.

## Claims

1. An emission control system (3), comprising:
an exhaust pipe portion (15), adapted to guide exhaust gas from an engine to outside;
a catalyst (5), accommodated in the exhaust pipe portion (15),
an additives injection valve (23), provided at the exhaust pipe portion (15) located at upstream side of the catalyst (5), and configured to inject additives to be supplied to the catalyst (5) toward a flow of the exhaust gas in the exhaust pipe portion (15), wherein
the exhaust pipe portion (15) has an exhaust gas induction portion (28) which is located at upstream side of the catalyst (5), and which includes an exhaust pipe part which intersects an injection flow of the additives injected by the additive injection valve (23) **characterised in that**
a sectional shape of a_flow path of the exhaust pipe part is formed into a fan-like shape which is the same shape as a shape of a downstream side of the injection flow as projected from a transverse direction of the injection flow

2. The emission control system (3) as set forth in Claim 1, wherein
the exhaust pipe portion (15) located at upstream side of the catalyst (5) is formed in such a manner as to Intersect the injection flow of the additives at an acute angle and to confront the catalyst (5), and
the exhaust gas induction portion (28) is formted from an upstream part of the exhaust pipe portion (15) which intersects the injection flow of the additives.

3. The emission control system (3) as set forth in Claim 13, wherein
the exhaust pipe portion (15) locatad at upstream side of the catayst (5) is formed in such a manner as to intersect the injection flow of the additives in a substantially normal direction and to confront the catatyst (5), and
the exhaust gas induction portion (28) is formed from an upstream part of the exhaust pipe portion (15) which intersects the injection flow of the additives.

4. The emission control system (3) as set forth in Claim 3, wherein
a release portion where a contact with the injection flow of the additives which is deflected as a result of collision with the exhaust gas is avoided, is formed at a downstream part of the exhaust pipe portion which intersects the injection flow of the additives.

5. The emission control system (3) as set forth in Claim 1, whereln
the exhaust gas induction portion (28) is formed in such a manner as to keep an area of a flow path from an upstream side of the exhaust pipe portion constant

6. The emissions control system (3) as set forth in Claim 1, wherein the exhaust pipe portion (15) is provided with:
a bent portion (15a) connected to an upstream side of the catalyst (5), and formed by bending the exhaust pipe portion (15); and
a projecting portion (24), one end of which is opened to a wall surface of the bent portion (15a), and which projects to an opposite side of the catalyst (5) In a direction of a central axis of the catalyst (5), and
the additive injection valve (23) is provided at the other end of the projecting portion (24).

## Patentansprüche

1. Abgasregelungssystem (3) mit:
einem Abgasrohrabschnitt (15), der dafür geeignet ist, ein Abgas von einem Motor zur Außenumgebung zu führen;
einem im Abgasrohrabschnitt (15) aufgenommenen Katalysator (5);
einem Additiveinspritzventil (23), das am Abgasrohrabschnitt (15) stromaufwärtsseitig vom Katalysator (5) angeordnet und dafür konfiguriert ist, dem Katalysator (5) zuzuführende Additive in eine Strömung des Abgases im Abgasrohrabschnitt (15) einzuspritzen, wobei
der Abgasrohrabschnitt (15) einen Abgaseintrittsabschnitt (28) aufweist, der stromaufwärtsseitig vom Katalysator (5) angeordnet ist und einen Abgasrohrteil aufweist, der eine Einspritzströmung der durch das Additiveinspritzventil (23) eingespritzten Additive schneidet;
**dadurch gekennzeichnet, dass**
eine Querschnittsform eines Strömungsweges des Abgasrohrteils in einer Fächerform ausgebildet ist, die der Form einer Stromabwärtsseite der Einspritzströmung, projiziert von einer Querrichtung der Einspritzströmung, gleicht.

2. Abgasregelungssystem (3) nach Anspruch 1, wobei
der stromaufwärtsseitig vom Katalysator (5) angeordnete Abgasrohrabschnitt (15) derart ausgebildet ist, dass er die Einspritzströmung der Additive unter einem spitzen Winkel schneidet und dem Katalysator (5) gegenüberliegt, und
der Abgaseintrittsabschnitt (28) von einem stromaufwärtsseitigen Teil des Abgasrohrabschnitts (15) ausgebildet ist, der die Einspritzströmung der Additive schneidet.

3. Abgasregelungssystem (3) nach Anspruch 1, wobei
der stromaufwärtsseitig vom Katalysator (5) angeordnete Abgasrohrabschnitt (15) derart ausgebildet ist, dass er die Einspritzströmung der Additive im Wesentlichen senkrecht schneidet und dem Katalysator (5) gegenüberliegt, und
der Abgaseintrittsabschnitt (28) von einem stromaufwärtsseitigen Teil des Abgasrohrabschnitts (15) ausgebildet ist, der die Einspritzströmung der Additive schneidet.

4. Abgasregelungssystem (3) nach Anspruch 3, wobei
ein Freisetzungsabschnitt, wo ein Kontakt mit der Einspritzströmung der Additive vermieden wird, der infolge einer Kollision mit dem Abgas abgelenkt wird, an einem stromabwärtsseitigen Teil des Abgasrohrabschnitts ausgebildet ist, der die Einspritzströmung der Additive schneidet.

5. Abgasregelungssystem (3) nach Anspruch 1, wobei
der Abgaseintrittsabschnitt (28) derart ausgebildet ist, dass ein Flächenwert eines sich von einer Stromaufwärtsseite des Abgasrohrabschnitts erstreckenden Strömungsweges konstant bleibt.

6. Abgasregelungssystem (3) nach Anspruch 1, wobei der Abgasrohrabschnitt (15) aufweist:
einen gebogenen Abschnitt (15a), der mit einer Stromaufwärtsseite des Katalysators (5) verbunden ist und durch Biegen des Abgasrohrabschnitts (15) gebildet wird; und
einen Vorsprungabschnitt (24), wobei der Vorsprungabschnitt ein Ende aufweist, das sich in einer Wandfläche des gebogenen Abschnitts (15a) öffnet, und von einer gegenüberliegenden Seite des Katalysators (5) in Richtung einer Mittelachse des Katalysators (5) hervorsteht, und
das Additiveinspritzventil (23) am anderen Ende des Vorsprungabschnitts (24) angeordnet ist.

## Revendications

1. Système de contrôle d'émission (3), comprenant :
une partie de tuyau d'échappement (15), adaptée pour guider les gaz d'échappement d'un moteur vers l'extérieur ;
un catalyseur (5) logé dans la partie de tuyau d'échappement (15) ;
une soupape d'injection d'additif (23), prévue au niveau de la partie de tuyau d'échappement (15) positionnée au niveau du côté en amont du catalyseur (5), et configurée pour injecter des additifs à alimenter au catalyseur (5) vers un flux du gaz d'échappement dans la partie de tuyau d'échappement (15), dans lequel :
la partie de tuyau d'échappement (15) a une partie d'induction de gaz d'échappement (28) qui est positionnée au niveau du côté en amont du catalyseur (5), et qui comprend une partie de tuyau d'échappement qui coupe un flux d'injection des additifs injectés par la soupape d'injection d'additif (23), **caractérisé en ce que :**
une forme en coupe d'une trajectoire de flux de la partie de tuyau d'échappement est formée selon une forme d'éventail qui est la même forme qu'une forme d'un côté en aval du flux d'injection, tel que faisant saillie d'une direction transversale du flux d'injection.

2. Système de contrôle d'émission (3) selon la revendication 1, dans lequel :
la partie de tuyau d'échappement (15) positionnée du côté en amont du catalyseur (5) est formée afin de couper le flux d'injection des additifs au niveau d'un angle aigu et de faire face au catalyseur (5) ; et
la partie d'induction de gaz d'échappement (28) est formée à partir d'une partie en amont de la partie de tuyau d'échappement (15) qui coupe le flux d'injection des additifs.

3. Système de contrôle d'émission (3) selon la revendication 1, dans lequel :
la partie de tuyau d'échappement (15) positionnée au niveau du côté en amont du catalyseur (5) est formée afin de couper le flux d'injection des additifs dans une direction sensiblement normale et faire face au catalyseur (5) ; et
la partie d'induction de gaz d'échappement (28) est formée à partir d'une partie en amont de la partie de tuyau d'échappement (15) qui coupe le flux d'injection des additifs.

4. Système de contrôle d'émission (3) selon la revendication 3, dans lequel :
une partie de libération où un contact avec le flux d'injection des additifs qui est détecté suite à la collision avec le gaz d'échappement est évité, est formée au niveau d'une partie en aval de la partie de tuyau d'échappement qui coupe le flux d'injection des additifs.

5. Système de contrôle d'émission (3) selon la revendication 1, dans lequel :
la partie d'induction de gaz d'échappement (28) est formée afin de maintenir une zone d'une trajectoire de flux à partir d'un côté en amont de la partie de tuyau d'échappement, constante.

6. Système de contrôle d'émission (3) selon la revendication 1, dans lequel la partie de tuyau d'échappement (15) est prévue avec :
une partie de coude (15a), raccordée à un côté en amont du catalyseur (5) et formée en pliant la partie de tuyau d'échappement (15) ; et
une partie en saillie (24), dont une extrémité est ouverte sur une surface de paroi de la partie de coude (15a) et qui fait saillie sur un côté opposé du catalyseur (5) dans une direction d'un axe central du catalyseur (5) ; et
la soupape d'injection d'additif (23) est prévue au niveau de l'autre extrémité de la partie en saillie (24).
